Europäisches Patentamt

(19) European Patent Office

Office européen des brevets

(11) Publication number: **0 147 372**

**A2**

(12) **EUROPEAN PATENT APPLICATION**

(21) Application number: **84850323.1**

(22) Date of filing: **25.10.84**

(51) Int. Cl.⁴: **F 16 C 35/06**

(30) Priority: **09.11.83 SE 8306158**

(43) Date of publication of application:
**03.07.85 Bulletin 85/27**

(84) Designated Contracting States:
**DE FR GB**

(71) Applicant: **AKTIEBOLAGET ELECTROLUX**
**Luxbacken 1**
**S-105 45 Stockholm(SE)**

(72) Inventor: **Nilsson, Bengt Göran Erling**
**Getingstigen 3 D**
**S-593 00 Västervik(SE)**

(74) Representative: **Hagelbäck, Evert Isidor et al,**
**c/o AB Electrolux Patentavdelningen**
**S-105 45 Stockholm(SE)**

(54) **Device for attaching a bearing in a bearing holder.**

(57) In a device for attaching a bearing (12) in a bearing holder (10), preferably an end shield bearing bracket in an electric machine, the bearing is fitted in a cut out (11) in the bearing holder. The bearing (12) is secured against rotational movement relative to the bearing holder by means of a ring (22) of elastic material which is disposed in a groove (18) in the bearing holder so as to be clamped between the bearing and the bottom (21) of the groove. The groove (18) is so positioned that the elastic ring (22) also exerts an axially directed force on the bearing (12).

EP 0 147 372 A2

Device for attaching a bearing in a bearing holder

The present invention relates to a device of the type referred to in the preamble of the following Claim 1.

In electric motors having ball bearings it is common to arrange a ring of elastic material, for example an O-ring, between the outer race ring of the ball bearing and the adjacent wall in an opening for the bearing in the end shield, the ring being clamped between the outer race ring and the wall. Thereby the outer race ring is prevented from being engaged in the rotation of the inner race ring. To lock the bearing axially a cap is required which, when the end shield is of metal, can be secured to the shield by a screw or a rivet joint. An example of the bearing attachment above referred to is described in DE-OS 1,400,313.

When the end shield is made of some plastics material a rivet joint cannot be used to secure the bearing cap to the end shield but more complex attachment means have to be used.

In DE-OS 2,519,023 a device for securing a ball bearing in a bearing holder is described in which a lock ring is disposed in a groove in the holder. The lock ring is caused by screws to abut against the rounded edge bridging the radial limit surface and the axial limit surface of the outer race ring. In this way an attachment of the outer race ring is achieved which can be completely free from axial play. However, the arrangement demands special measures in that holes must be made and screws be provided for the intended function to be obtained.

With the above prior art as background the invention has for an object with simple means to provide a bearing attachment which is free from axial play and also secured against rotation of the bearing relative to the bearing holder. The object is achieved in a device having the characterizing features defined in the following claims.

San-IW 50-00

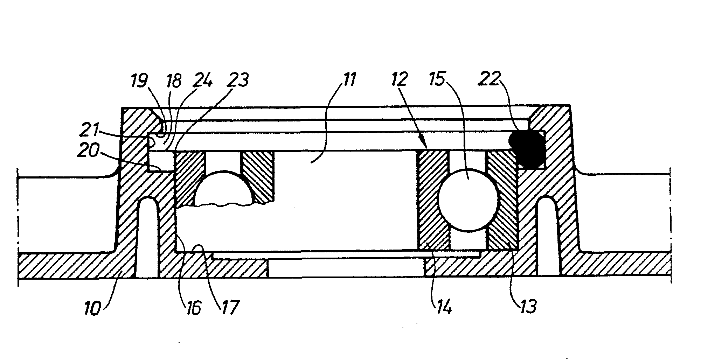

An embodiment of the invention will now be described with reference to the accompanying drawing the single Figure of which illustrates the attachment of a ball bearing in an end shield.

In an end shield 10, preferably of plastics material, a straight circular cut out 11 is made in which is inserted a ball bearing 12 comprising an outer race ring 13 and an inner race ring 14 with interposed balls 15. The inner race ring is intended to be fixed to the rotor shaft of an electric motor, not shown. The simplest way of manufacturing the end shield is by moulding, and the dimensions of the cut out are such that the bearing can be inserted with some play. No finishing treatment of the circular side surface 16 or bottom surface 17 is required.

In the side surface 16 is a groove 18 which is rectangular in cross section. Thus, the groove has two side walls 19, 20 and a bottom 21 at right angles to one another. An elastic ring 22 of circular cross section and of a size corresponding to the width of the groove is placed in the groove. Preferably, the ring is made of rubber and can be of the O-ring type. The groove 18 is positioned in the cut out in such a way that, when the bearing is in the inserted position so that the outer race ring 13 lies against the bottom 17 of the cut out, the elastic ring engages the annular edge 23 bridging the axial and the radial limit surfaces of the outer race ring. Preferably, the outer race ring 13 and the groove 18 are so positioned relative to one another that a normal 24 from the edge 23 towards the bottom 21 of the groove will reach the bottom at a point located generally straight between the two side walls 19, 20.

For mounting the bearing 12 in the cut out 11, first the elastic ring 22 is placed in the groove 18 and then the bearing is pressed into the cut out by using a mandrel or the like. When the outer race ring abuts the bottom surface 17 of the cut out, the ring 22 is allowed to partly roll over the edge 23 of the outer race ring so as to exert an axial force pressing the bearing against the bottom surface 17. Further, when clamped between the bottom 21 of the groove and the outer race ring 13 the ring 22 exerts a radial force preventing the outer race ring from being engaged in the rotation of the inner race ring 14. Thus, solely by the aid of an elastic ring placed in a groove in the side wall of the cut out securing of the bearing both axially and radially has been obtained.

The invention has been described with reference to a ball bearing. It is evident that it is applicable also to so-called slide bearings.

3          **0147372**

## Claims

1. A device for attaching a bearing (12) in a bearing holder (10), preferably an end shield bearing bracket in an electric machine, the bearing (12) being fitted in a cut out (11) in the bearing holder (10) and secured against rotational movement relative to the bearing holder by means of a ring (22) of elastic material which is arranged in a groove (18) in the bearing holder in such a way that it is clamped between the bearing (12) and the bottom (21) of the groove, c h a r a c t e r - i z e d in that the groove (18) is so positioned relative to the bearing (12) that the elastic ring (22) over its entire length engages with the annular edge (23) separating the radial limit surface from the axial limit surface of the bearing, the ring thus exerting an axially directed force on the bearing (12).

2. A device according to Claim 1, c h a r a c t e r i z e d in that the groove (18) is of rectangular form and so positioned relative to the bearing (12) that the point of incident of a normal (24) from the annular edge (23) of the bearing to the bottom will be generally straight between the side walls (19,20) of the groove.

3. A device according to Claim 2, c h a r a c t e r i z e d in that the width of the groove (18) generally corresponds to the diameter of the ring (22).

4. A device according to any preceding claim, c h a r a c t e r i z e d in that the bearing (12) is a ball bearing, whose outer race ring (13), against which the elastic ring (22) lies, is fitted in the cut out (11) of the bearing holder (10).

0147372

1/1